**Europäisches Patentamt**

(19) **European Patent Office**

**Office européen des brevets**

(11) Publication number: **0 153 722**
**A2**

(12) # EUROPEAN PATENT APPLICATION

(21) Application number: **85102054.5**

(22) Date of filing: **25.02.85**

(51) Int. Cl.⁴: **H 04 J 15/00**
**H 04 B 9/00, G 02 B 6/34**

(30) Priority: **02.03.84 JP 38752/84**

(43) Date of publication of application:
**04.09.85 Bulletin 85/36**

(84) Designated Contracting States:
**DE FR GB**

(71) Applicant: **Oki Electric Industry Company, Limited**
**7-12, Toranomon 1-chome Minato-ku**
**Tokyo 105(JP)**

(72) Inventor: **Tamura, Yasuaki OKI ELECTRIC INDUSTRY**
**Co., Ltd.**
**7-12 Toranomon 1-chome**
**Minato-ku Tokyo(JP)**

(72) Inventor: **Maeda, Hidenari OKI ELECTRIC INDUSTRY**
**Co., Ltd.**
**7-12 Toranomon 1-chome**
**Minato-ku Tokyo(JP)**

(74) Representative: **Betten, Jürgen, Dipl.-Ing.**
**Patentanwälte Lieck & Betten Maximiliansplatz 10**
**D-8000 München 2(DE)**

(54) Hybrid optical wavelength division multiplexer-demultiplexer.

(57) There are disclosed a hybrid optical wavelength division multiplexer for one-directional transmission, a hybrid optical wavelength division demultiplexer for one-directional transmission, and a hybrid optical wavelength division multiplexer-demultiplexer for bidirectional transmission. The multiplexer-demultiplexer has light-emitting diodes and photodetectors integral with an optical wavelength division multiplexer-demultiplexer, with input and output ports comprising electric interfaces, with the result that there is required no optical fiber coupling system between the light-emitting diodes and photodetectors and the optical wavelength division multiplexer-demultiplexer. The hybrid multiplexer, demultiplexer, or the multiplexer-demultiplexer is small in size and light in weight. The hybrid optical wavelength division multiplexer for one-directional transmission has collimator lenses for converting light of different wavelengths emitted from the light-emitting diodes into parallel beams of light, interference filters of different transmittivities for multiplexing the parallel beams of light, and another collimator lens for converging and coupling the modulated beams of light to the common-port optical fiber. The hybrid optical wavelength division demultiplexer for one-directional transmission demultiplexer light of different wavelengths from the common-port optical fiber, the demodulated light being detected by the photodetectors. The hybrid optical wavelength division multiplexer-demultiplexer for bidirectional transmission is a combination of the multiplexer and demultiplexer.

Fig. 2

SPECIFICATION 0153722

# HYBRID OPTICAL WAVELENGTH DIVISION
# MULTIPLEXER-DEMULTIPLEXER

## BACKGROUND OF THE INVENTION

### 1. Field of the invention:

The present invention relates to a hybrid optical wavelength division multiplexer-demultiplexer in which a light-emitting diode and a photodiode are integrally constructed with an optical wavelength division multiplexer-demultiplexer.

### 2. Description of the Prior Art:

Optical wavelength division multiplexing transmission systems give plural independent optical signal channels with different wavelengths over a single optical fiber. Such transmission system includes optical wavelength division multiplexer and demultiplexer coupled respectively to the ends of an optical fiber transmission path for separating and combining the optical signals. A prior optical wavelength division multiplexer-demultiplexer for bidirectional transmission, for example, is connected by optical fibers to ends of transmission, receiving, and common ports. The other ends of the transmission and receiving ports are respectively coupled by optical fibers to a light-emitting module (such as a laser diode (LD) module or an LED module) and a photodetector module (such as a PIN PD module or an APD module) for conversion between electric and optical signals.

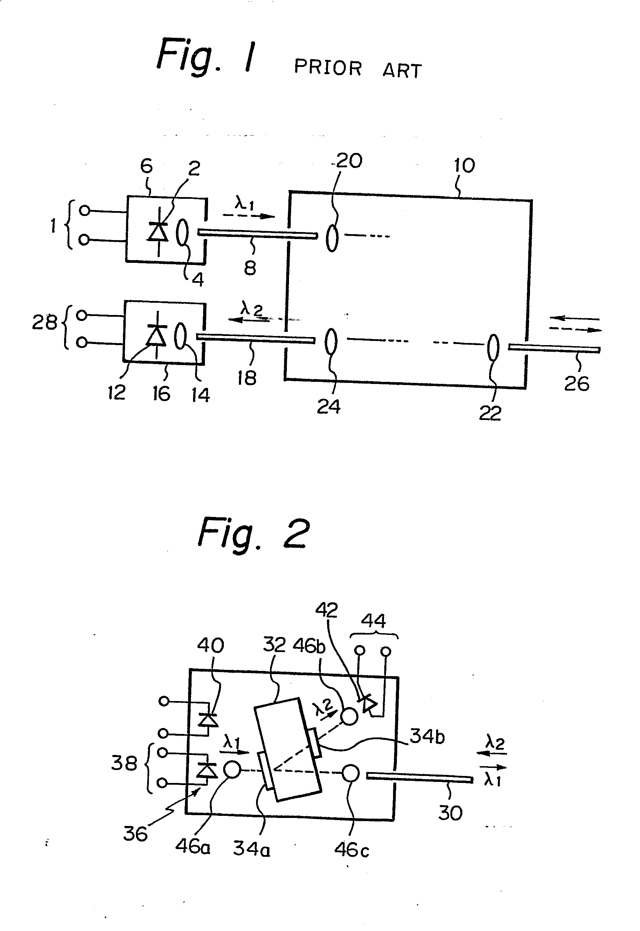

FIG. 1 of the accompanying drawings illustrates an arrangement of a conventional optical wavelength division multiplexer-demultiplexer for bidirectional transmission in which

0153722

a light-emitting module and a photodetector module are coupled to an optical wavelength division multiplexer-demultiplexer. A light-emitting module 6 is composed of a light-emitting diode 2 and a lens 4, and coupled to an optical wavelength division multiplexer-demultiplexer 10 through a transmission-port optical fiber 8. A photodetector module 16 is composed of a photodiode 12 and a lens 14, and coupled to the optical wavelength division multiplexer-demultiplexer 10 through a receiving-port optical fiber 18. The illustrated prior optical wavelength division multiplexer-demultiplexer for bidirectional transmission is employed to transmit two optical signals of wavelengths $\lambda_1$ and $\lambda_2$. An optical signal having the wavelength $\lambda_1$ is generated from the light-emitting diode 2 in response to an electric signal applied to electric terminals 1, and is transmitted to a common-port optical fiber 26 through the lens 4, the transmission-port optical fiber 8, lenses 20, 22 and another optical system. An optical signal having the wavelength $\lambda_2$ is received from the common-port optical fiber 26, and is transmitted through the lens 22, a lens 24, the receiving-port optical fiber 18 to the photodetector module 16 by which the optical signal is converted into an electric signal outputted through electric terminals 28. The conventional system is necessarily of the above arrangement since the coupling efficiency would be lowered if the distances between the light-emitting diode and the optical fiber and between the photodiode and the optical fiber were increased. More specifically, where the lenses 20, 24 and the lens 22 are coupled by optical fibers, the optical system is symmetrical and hence the coupling efficiency would not be subjected to an undue reduction if the distances between the lenses 20, 22 and the lenses 24, 22 were increased. However, the coupling distances between the light-emitting diode and the optical fiber and between the photodiode and the optical fiber cannot be increased appreciably. It has been required to reduce the distance from the light-emitting diode 2 and the lens 4 up to the entrance of the transmission port optical fiber 8 and the distance from the photodiode 12 and the lens 14 up to the entrance of the receiving-port optical fiber 18, and to provide the optical fibers 8, 18 to couple the modules 6, 16 to the optical wavelength division multiplexer-demultiplexer 10.

Therefore, it has been necessary to provide the expensive light-emitting and photodetector modules 6, 16 other than the optical wavelength division multiplexer-demultiplexer 10. The overall construction has been complex and the entire size has been large, resulting in a loss in the optical coupling system. Another problem has been that there is difficulty in handling the input and output systems as the transmission and receiving ports are coupled to the optical fibers.

SUMMARY OF THE INVENTION

It is an object of the present invention to provide a hybrid optical wavelength division multiplexer-demultiplexer in which transmission and receiving ports are composed of electric interfaces to dispense with any optical fiber coupling system between a light-emitting diode and an optical wavelength division multiplexer-demultiplexer and between a photodiode and an optical wavelength division multiplexer-demultiplexer.

Another object of the present invention is to provide a hybrid optical wavelength division multiplexer-demultiplexer for bidirectional transmission, or a hybrid optical wavelength division multiplexer for one-directional transmission, or a hybrid optical wavelength division demultiplexer for one-directional transmission, which is composed of a reduced number of optical coupling components, easy to handle, small in size, and light in weight.

According to the present invention, a hybrid optical wavelength division multiplexer for one-directional transmission includes a pair of collimator lenses for converting light into parallel beams of light and for converging parallel beams of light, between a plurality of light-emitting means for producing light of different wavelengths and a single common-port optical fiber. Light beams of different wavelengths emitted from the light-emitting means in response to applied electric singals are converted by the collimator lenses into parallel rays of light which are passed through or reflected by an optical system composed of interference filters of different characteristics, so that the rays of light are multiplexed and applied to the common-port optical fiber via another collimator lens. The interference filters have different transmissivity characteristics to pass certain optical wavelengths while reflecting light of other wavelengths. The interference filters are applied to side surfaces of a glass block interposed between the collimator lenses for applying the light emitted from the light-emitting means to the common-port optical fiber. The light produced from the light-emitting means is first converted by the collimator lenses into parallel beams of light, which are passed through or reflected by the interference filters. The light beams are thereafter converged by the other collimator lens and coupled to the common-port optical fiber.

A hybrid optical wavelength division demultiplexer, according to the present invention includes a collimator lens for converting light of different wavelengths transmitted from a single common-port optical fiber into parallel beams of light, which are passed through or reflected by interference filters with different transmissivities applied to a glass block, whereby the light beams are demultiplexed. The demultiplexed optical signals are then converged by respective collimator lenses and detected by respective photodetectors which produce corresponding electric signals.

A hybrid optical wavelength division multiplexer-demultiplexer for bidirectional transmission is a combination of the above hybrid optical wavelength division multiplexer for one-direction transmission and the above hybrid optical wavelength division demultiplexer for one-direction transmission. One or more optical signals of different wavelengths emitted from the light-emitting means in response to applied electric signals are multiplexed and coupled to the single common-port optical fiber, and one or more optical signals of different wavelengths received from the common-port optical fiber are demultiplexed and detected by corresponding photodetectors which convert the optical signals into electric signals.

The above and other objects, features and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a schematic view of a conventional optical wavelength division multiplexer-demultiplexer;

FIG. 2 is a schematic view of a hybrid optical wavelength

0153722

division multiplexer-demultiplexer for bidirectional transmission according to the present invention;

FIG. 3(a) and 3(b) are diagrams showing the characteristics of interference filters employed in the optical wavelength division multiplexer-demultiplexer shown in FIG. 2;

FIG. 4(a) is a schematic view of a hybrid optical wavelength division multiplexer for one-directional transmission of two waves according to the present invention;

FIG. 4(b) is a schematic view of a hybrid optical wavelength division demultiplexer for one-directional transmission of two waves according to the present invention;

FIG. 5 is a schematic view of a hybrid optical wavelength division multiplexer-demultiplexer for bidirectional transmission of four waves according to the present invention;

FIGS. 6(a) through 6(d) are diagrams showing the characteristics of interference filters employed in the optical wavelength division multiplexer-demultiplexer shown in FIG. 5;

FIG. 7(a) is a schematic view of a hybrid optical wavelength division multiplexer for bidirectional transmission of four waves according to the present invention;

FIG. 7(b) is a schematic view of a hybrid optical wavelength division demultiplexer for bidirectional transmission of four waves according to the present invention;

FIG. 8 is a diagram illustrative of coupling efficiency vs. distance characteristics obtained when a laser diode (LD) is employed; and

FIG. 9 is a diagram illustrative of coupling efficiency vs. distance characteristics obtained when a light-emitting diode (LED) is employed.

## DESCRIPTION OF THE PREFERRED EMBODIMENTS

According to the present invention, a pair of spherical lenses is provided as collimator lenses respectively between a light-emitting diode and an optical fiber and between a photodiode and the optical fiber, the arrangement being such that light emitted from the light-emitting diode is converted by one of the spherical lens into parallel rays of light which are then converged by the other spherical lens into the optical fiber. With the foregoing construction, the coupling efficiency would not be lowered if the distance between the two lenses were increased. It is therefore possible to provide various optical systems between the two lenses for separating and combining optical signals of plural different wavelengths without lowering the coupling efficiency.

FIG. 2 show a hybrid optical wavelength division multiplexer-demultiplexer according to the present invention. The hybrid optical wavelength division multiplexer-demultiplexer includes a common-port optical fiber 30, a glass block 32, interference filters 34a, 34b applied to the glass block 32 and having different wavelength passbands characteristics, a light-emitting diode (LD or LED) 36 for generating light having a wavelength $\lambda_1$, electric signal transmitting terminals 38 connected to the light-emitting diode 36, an automatic power control photodiode 40 for detecting a portion of light emitted from the light-emitting diode 36 to keep the amount of light from the light-emitting diode 36 at a constant level, a photodiode 42 for detecting light of a wavelength $\lambda_2$ transmitted over the common-port optical fiber 30, electric signal receiving terminals 44 coupled to the photodiode 42, and spherical lenses 46a, 46b, 46c.

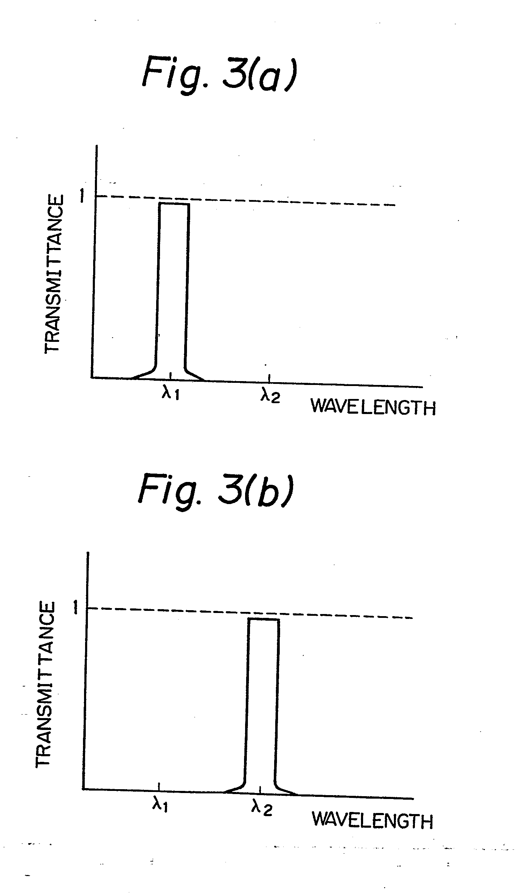

Each of the interference filters 34a, 34b comprises several tens of layers formed by vapor deposition on the glass block 32 for developing an optical interference to pass light of a certain wavelength only while reflecting light of other wavelengths. FIG. 3(a) shows a characteristic curve of the interference filter 34a, the transmissivity being greatest at the wavelength $\lambda_1$ with light reflected in other wavelengths. FIG. 3(b) shows a characteristic curve of the interference filter 34b, the transmissivity being greatest at the wavelength $\lambda_1$ with light reflected in other wavelengths.

Operation of the arrangement of FIG. 2 is as follows: An electric signal applied to the terminals 38 is converted by the light-emitting diode 36 into light of the wavelength $\lambda_1$ which is converted by the spherical lens 36a into parallel rays of light. The rays of light then pass through the interference filter 34a and are converged by the spherical lens 46c into light which falls on and is transmitted by the common-port optical fiber 30. Light of the wavelength $\lambda_2$ received from the common-port optical fiber 30 is converted by the spherical lens 46c into parallel beams of light which pass through the glass block 32 and are reflected by the interference filter 34a. The reflected light then passes through the interference filter 34b and is focused on the photodiode 42 via the spherical lens 46b. The photodiode 42 converts the applied light into an electric signal which is issued to the electric signal receiving terminals 44. External connection ports of the hybrid optical wavelength division multiplexer-demultiplexer for bidirectional transmission comprise the electric signal transmitting terminals 38 for driving the light-emitting diode 36, the electric signal receiving terminals 44 coupled to the photodiode 42, and the

- 9 -

0153722

common-port optical fiber 30. These three ports are mounted integrally on the single device, in which the optical system is also integrally disposed. Since the hybrid optical wavelength division multiplexer-demultiplexer of the invention is electrically coupled to external sources through the terminals 38, 44, the input and output systems can easily be handled, and any loss caused by the optical coupling system can be reduced.

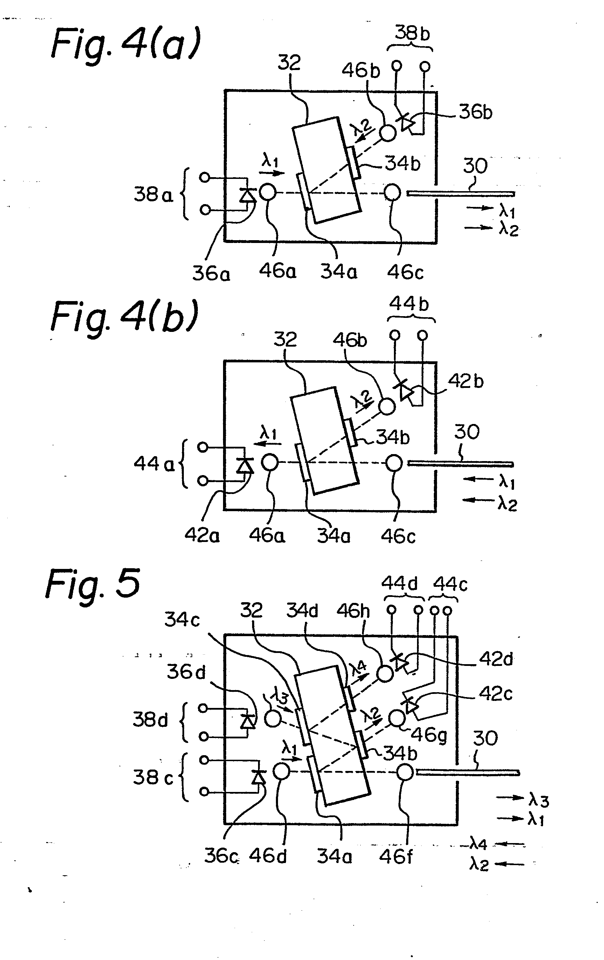

FIGS. 4(a) and 4(b) are illustrative respectively of a hybrid optical wavelength division multiplexer for one-directional transmission of two waves and a hybrid optical wavelength division demultiplexer for one-directional transmission of two waves. The hybrid optical wavelength division multiplexer for one-directional transmission of two waves as shown in FIG. 4(a) includes two light-emitting diodes 36a, 36b for emitting light beams of different wavelengths which are multiplexed and transmitted over a single common-port optical fiber 30. More specifically, electric signals applied to electric signal transmitting terminals 38a, 38b are converted by the light-emitting diodes into two optical signals having wavelengths $\lambda_1$, $\lambda_2$, respectively. The light of the wavelength $\lambda_1$ from the light-emitting diode 36a is converted by a spherical lens 46a into parallel beams of light which pass through an interference filter 34a and a glass block 32. The light is then converged by a spherical lens 46c and transmitted over the common-port optical fiber 30. Light of the wavelength $\lambda_2$ from the light-emitting diode 36b is converted by a spherical lens 46b into parallel beams of light which pass through an interference filter 34b and the glass block 32 to the interference filter 34a. Since the interference filter 34a passes the light of the wavelength $\lambda_1$ and reflects light of

0153722

other wavelengths, as shown in FIG. 3(a), the light of the wavelength $\lambda_2$ is reflected by the interference filter 34a. The light is then converged by the spherical lens 46c and transmitted over the common-port optical fiber 30. Therefore, the optical signals of the wavelengths $\lambda_1$, $\lambda_2$ are multiplexed over the common-port optical fiber 30. Although the arrangement of FIG. 4(a) has an automatic power control photodiode such as shown in FIG. 2, it is omitted from illustration as it has the same operation and function. Such an automatic power control photodiode is also omitted from illustration in each of embodiments described below.

The hybrid optical wavelength division demultiplexer for one-directional transmission of two waves as shown in FIG. 4(b) serves to demultiplex optical signals of two different wavelengths transmitted over a common-port optical fiber. Light of a wavelength $\lambda_1$ passes through an interference filter 34a and detected by a photodetector 42a which issues an electric signal to electric signal receiving terminals 44a. Light of a wavelength $\lambda_2$ is reflected by the interference filter 34a, passes through an interference filter 34b, and then detected by a photodiode 42b which issues an electric signal to electric signal receiving terminals 44b. With the arrangements of FIGS. 4(a) and 4(b), each of the hybrid optical wavelength division multiplexer and demultiplexer has optical fuctional components such as spherical lenses, interference filters, and a glass block, all disposed between the light-emitting diode and photodiode and the common-port optical fiber.

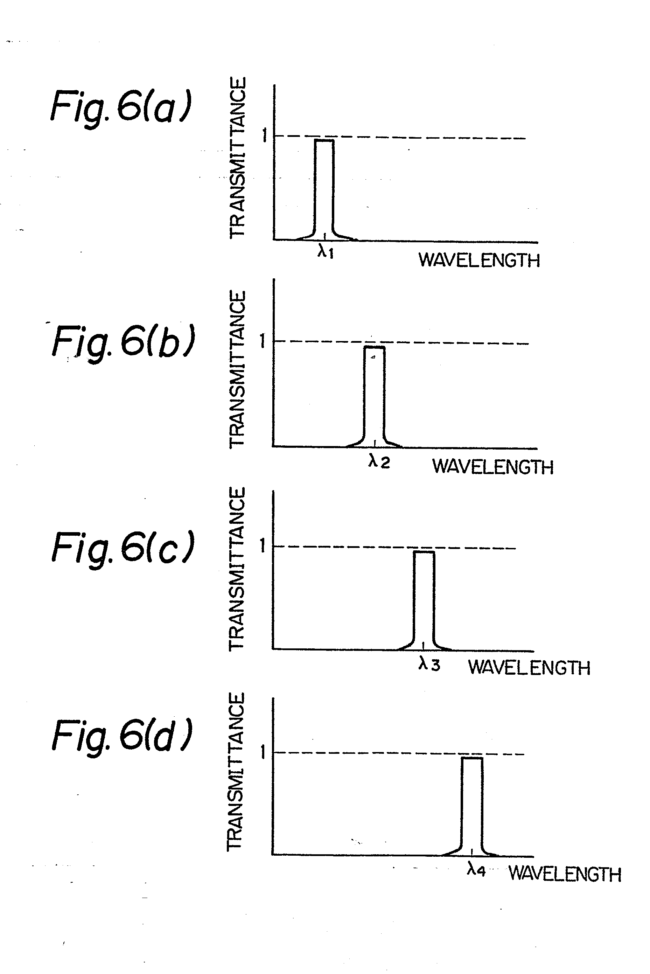

FIG. 5 shows a hybrid optical wavelength division multiplexer-demultiplexer for bidirectional transmission of four waves. The multiplexer-demultiplexer of FIG. 5 can multiplex two optical signals having wavelengths $\lambda_1$, $\lambda_3$ and send them to a common-port optical fiber, and also can demultiplex two optical signals having wavelengths $\lambda_2$, $\lambda_4$ transmitted from the common-port optical fiber. The multiplexer-demultiplexer includes interference filters 34a, 34b, 34c, 34d having characteristics as shown in FIGS. 6(a) through 6(d), respectively, for passing light of certain wavelengths and reflecting light of other wavelengths. More specifically, as shown in FIG. 6(a), the interference filter 34a has a maximum permissivity at a wavelength $\lambda_1$ and reflects light in other wavelengths. As shown in FIGS. 6(b), 6(c) and 6(d), the interference filters 34b, 34c and 34d have maximum permissivities at wavelengths $\lambda_2$, $\lambda_3$ and $\lambda_4$, respectively, and reflect light in other wavelengths. In FIG. 5, light of the wavelength $\lambda_1$ emitted from a light-emitting diode 36c is converted by a spherical lens 46d into parallel beams of light which pass through the interference filter 34a and a glass block 32. The light is then converged by a spherical lens 46f and coupled to a common-port optical fiber 30. Light having the wavelength $\lambda_3$ emitted from a light-emitting diode 36d is converted by a spherical lens 46e into parallel beams of light which pass through the interference filter 34c and the glass block 32. The light is then reflected by the interference filters 34d, 34a, and converged by the spherical lens 46f and coupled to the common-port optical fiber 30. Light of the wavelength $\lambda_2$ received from the common-port optical fiber 30 is converted by the spherical lens 46f into parallel beams of light which are reflected by the interference filter 34a. The light is then passed through the interference filter 34b, and converged by a spherical lens 46g and detected by a photodetector 42c, which issues an electric signal to electric signal receiving terminals 44c. Light of the wavelength $\lambda_4$ received from the common-port optical fiber 30 is reflected successively by the interference filters 34a, 34b, 34c, after which the light is passed through the interference filter 34d and detected by the photodetector 42d, from which an electric signal is produced via electric signal receiving terminals 44d.

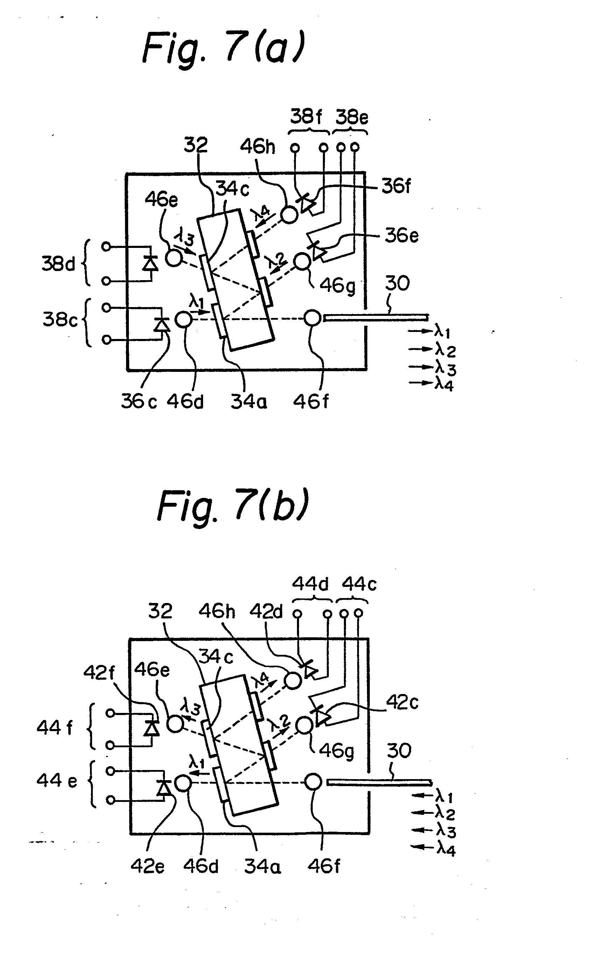

FIGS. 7(a) and 7(b) respectively show a hybrid optical wavelength division multiplexer for bidirectional transmission of four waves and a hybrid optical wavelength division demultiplexer for bidirectional transmission of four waves. The hybrid optical wavelength division multiplexer for bidirectional transmission of four waves as shown in FIG. 7(a) is a modification of the arrangement of FIG. 4(a) so as to be able to transmit four waves, and employs four interference filters, as shown in FIG. 6, for multiplexing four optical signals of different wavelengths. In FIG. 7(a), optical signals having wavelengths $\lambda_1$, $\lambda_3$, $\lambda_2$, $\lambda_4$, emitted from light-emitting diodes 36c, 36d, 36e, 36f in response to electric signals applied respectively to electric signal receiving terminals 38c, 38d, 38e, 38f are multiplexed and coupled to a common-port optical fiber 30. The hybrid optical wavelength division demultiplexer for bidirectional transmission of four waves as shown in FIG. 7(b) is modification of the arrangement of FIG. 4(b) so as to be able to receive four waves, and employs four interference filters, as shown in FIG. 5, for demultiplexing four optical signals of different wavelengths transmitted from the common-port optical fiber 30. In FIG. 7(b), optical signals having wavelengths $\lambda_1$, $\lambda_2$, $\lambda_3$, $\lambda_4$, transmitted from the common-port optical fiber 30 are detected by photodiodes 42e, 42c, 42f, 42d which issue electric signals through electric signal receiving terminals 44e, 44c, 44f, 44d, respectively.

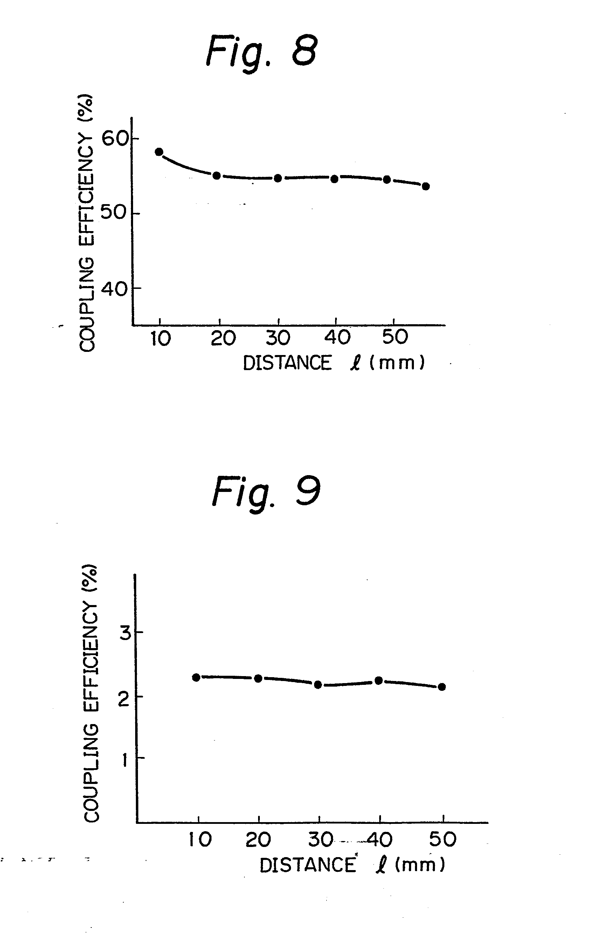

With the hybrid optical wavelength division multiplexer-demultiplexers shown in FIGS. 2, 4, 5 and 7, it is necessary to provide an increased distance between the light-emitting diodes and the common-port optical fibers. In the illustrated embodiments, light emitted from the light-emitting diode is converted by the spherical lens into parallel beams of light which are directed toward the spherical lens in front of the common-port optical fiber. FIG. 8 shows coupling efficiency vs. distance characteristics obtained by employing a laser diode in the foregoing embodiments. The graph of FIG. 8 has a horizontal axis indicating the distance between the spherical lens adjacent to the light-emitting diode and the spherical lens adjacent to the common-port optical fiber, and a vertical axis representing a coupling efficiency 7 (= power transmitted to the common-port optical fiber/total power emitted from the light-emitting diode). The common-port optical fiber used is a standard optical fiber having a fiber core of a diameter of 50 $\mu$m, an outside diameter of 125 $\mu$m (50/125 GI), and an N.A. (numerical aperture) of 0.20. The characteristic curve in FIG. 8 clearly shows that the coupling efficiency of the hybrid optical wavelength division multiplexer-demultiplexer of the embodiments of the invention will not be reduced if the coupling distance is in the range up to 50 mm. While the present invention has been described as being applied to multiplexing and demultiplexing of four wavelengths in the hybrid optical wavelength division multiplexer, the hybrid optical wavelength division demultiplexer, and the hybrid optical wavelength division multiplexer-demultiplexer, the invention is theoretically applicable to multiplexing and demultiplexing of as many wavelengths as desired. However, if too many wavelengths were involved, the distance between the light-emitting diodes and the common-port optical fiber would be increased, thus causing reduction of the coupling efficiency. It was experimentally confirmed that up to six waveformed can be multiplexed and demultiplexed without lowering the coupling efficiency according to the present invention.

FIG. 9 shows coupling efficiency vs. distance characteristics obtained by employing light emitted from an LED. The data of FIG. 9 was measured using the same optical fiber as described in the above experiment, and the graph of FIG. 9 has horizontal and vertical axis indicative of the same quantities as those in FIG. 8. Fig. 9 indicates, as with FIG. 8, that the coupling efficiency will not be lowered if the coupling distance is increased.

Although certain preferred embodiments have been shown and described, it should be understood that many changes and modifications may be made therein without departing from the scope of the appended claims.

0153722

What is claimed is:

1. A hybrid optical wavelength division multiplexer-demultiplexer for bidirectional transmission of light of different wavelengths by multiplexing optical signals of different wavelengths produced in response to electric signals applied to one or more electric signal receiving terminals and coupling the multiplexed optical signals to a common-port optical fiber, and by demultiplexing optical signals of different wavelengths transmitted from the common-port optical fiber and outputting electric signals corresponding to the demultiplexed optical signals to one or more electric signal transmitting terminals, said hybrid optical wavelength division multiplexer-demultiplexer comprising:

(a) one or more light-emitting means adapted to be connected to said one or more electric signal receiving terminals respectively for generating the optical signals of different wavelengths in response to the electric signals applied to said one or more electric signal receiving terminals;

(b) one or more photodetectors adapted to be connected to said one or more electric signal transmitting terminals respectively for converting the optical signals of different wavelengths transmitted from the common-port optical fiber into the electric signals;

(c) a first group of lenses for converting the optical signals from said one or more light-emitting means into parallel beams of light;

(d) a second lens for converging and coupling the parallel beams of light to the common-port optical fiber and for converting the optical signal of different wavelengths from the common-port optical fiber into parallel beams of light;

(e) a third group of lenses for converging and applying the second parallel beams of light from the common-port to said photodetectors; and

(f) a glass block and a plurality of interference filters applied to sides of said glass block for passing light of certain wavelengths only while reflecting light of other wavelengths to demultiplex the optical signals of different wavelengths received from the common-port optical fiber and couple the demultiplexed optical singals through said third group of lenses to said corresponding photodetectors respectively, and to multiplex the optical signals of different wavelengths emitted from said one or more light-emitting means and couple the multiplexed optical signal through said second lens to the common-port optical fiber.

2. A hybrid optical wavelength division multiplexer for one-directional transmission of light of different wavelengths by multiplexing optical signals of different wavelengths produced in response to electric signals applied to electric signal receiving terminals and coupling the multiplexed optical signals to a common-port optical fiber, said hybrid optical wavelength division multiplexer comprising:

(a) a plurality of light-emitting means adapted to be connected to the electric signal receiving terminals respectively for generating the optical signals of different wavelengths in response to the electric signals applied to the electric signal receiving terminals;

(b) a first group of lenses for converting the optical signals from said light-emitting means into parallel beams of light;

(c) a second lens for converging and coupling the parallel

0153722

beams of light to the common-port optical fiber; and

(d) a glass block and a plurality of interference filters applied to sides of said glass block for passing light of certain wavelengths only while reflecting light of other wavelengths to multiplex the optical signals of different wavelenths emitted from said light-emitting means and couple the multiplexed optical signals through said second lens to the common-port optical fiber.

3. A hybrid optical wavelength division demultiplexer for one-directional transmission of light of different wavelengths by demultiplexing optical signals of different wavelengths transmitted from a common-port optical fiber and issuing electric signals corresponding to the demultiplexed optical signals to electric signal transmitting terminals, said hybrid optical wavelength division demultiplexer comprising:

(a) a plurality of photodetectors adapted to be connected to the electric signal transmitting terminals respectively for converting the optical signals of different wavelengths transmitted from the common-port optical fiber into the electric signals;

(b) a second lens for converting the optical signals of different wavelengths from the common-port optical fiber into parallel beams of light;

(c) a third group of lenses for converging and applying the parallel beams of light from the common-port to said photodetectors; and

(d) a glass block and a plurality of interference filters applied to sides of said glass block for passing light of certain wavelengths only while reflecting light of other wavelengths to demultiplex the optical signals of different wavelengths received from the common-port optical fiber and couple the demultiplexed

- 18 -

0153722

optical signals through said third group of lenses to said corresponding photodetectors respectively.

Fig. 1 PRIOR ART

Fig. 2

2/6

0153722

# Fig. 3(a)

TRANSMITTANCE

1

λ₁    λ₂    WAVELENGTH

# Fig. 3(b)

TRANSMITTANCE

1

λ₁    λ₂    WAVELENGTH

Fig. 4(a)

Fig. 4(b)

Fig. 5

*Fig. 6(a)*

*Fig. 6(b)*

*Fig. 6(c)*

*Fig. 6(d)*

## Fig. 7(a)

## Fig. 7(b)

0153722

## Fig. 8

## Fig. 9